# EUROPEAN PATENT APPLICATION

(11) **EP 2 551 040 A1**
(43) Date of publication of application: **30.01.2013**
(21) Application number: 11006102.5
(22) Date of filing: 25.07.2011
(51) Int. Cl.: B22F 3/105, B22F 3/15

(54) **Method of manufacturing a component by hot isostatic pressing**

(71) Applicant: EADS Deutschland GmbH, 85521 Ottobrunn (DE); EADS UK Ltd., London, WC2R OAG (GB)
(72) Inventor: Schoberth, Achim, 82024 Taufkirchen (DE); Palm, Frank, 82008 Unterhaching (DE); Brandl, Dr. Erhard, 85117 Eitensheim (DE); Meyer, Jonathan, Calne Wiltshire, SN119UR (GB); Turner, Chris, Bedminster Bristol, BS3 4NF (GB); Hawkins, Andrew, Cheltenham Gloucestershire GL52 5AB (GB)

(57) **Abstract**

In a method for manufacturing a homogenous near net-shape component made of a material selected from a metal, a metal alloy, or a metal matrix composite, with the proviso that said the material does not decompose or otherwise undergo a quick chemical reaction before or during it melts or before or during the metal or metal alloy in the metal matrix composite melts, a gas tight container having one or more cavities and one or more walls is formed of said material by additive layer manufacturing (ALM) such that the container contains said material in comminuted form, whereafter the container and its content consisting of the same material is subjected to hot isostatic pressing. A system based on electron beam ALM consisting of a gas tight container without any welding seem and a communited material of the same kind from which the container is formed in the cavity or cavities thereof is also disclosed.

## Description

### Field of the Invention

The present invention relates to a method of manufacturing a component by means of hot isostatic pressing of a comminuted material in a container and a system consisting of a gas tight container enclosing the comminuted material.

### Background of the Invention

The manufacture of metallic components by powder metallurgy has been known since the middle of the 19^{th} century.

In 1955 the compaction of powders by hot isostatic pressing ("HIPping") started to be developed. In this method, powder, flakes, chips or other shapes (hereinafter collectively designated as "comminuted material") of e.g. a metal, metal alloy, ceramic material or a metal matrix composite (MMC) is filled into a container or capsule made of gas-tight thin-walled metal or metal alloy and having an opening, usually a collar. The bulk density of the comminuted material may e.g. range from 25% to 70% of the theoretical density. The container or capsule is evacuated before being sealed by welding. The container or capsule containing the comminuted material is then introduced into an autoclave where it is heated and pressurized under a high isostatic gas pressure.

In this process, the container wall deforms plastically, the container shrinks and the material inside is consolidated. Metal or metal alloy or MMC densities of up to theoretical densities can be achieved by this method. The densities of ceramics achievable by this process are usually somewhat lower, but usually still well over 90% of the theoretical density, in certain cases even up to 99.9% of the theoretical density.

To obtain the quasi-final component the container or capsule must be removed from the desired quasi-final metal, metal alloy, ceramic or metal matrix component e.g. by grinding or machining.

The consolidated quasi-final component is then machined to obtain the final component.

The container material must meet several requirements:
- its solidus temperature must be equal to or higher than that of the material
   inside the container;
- it must be weldable;
- it must be gas-tight at elevated temperatures and pressures; - it must have a sufficient ductility at the processing temperature to allow
   plastic deformation without cracks or voids; and
- it must be chemically inert with respect to the material inside the container

Suitable container materials may e.g. be selected from copper, iron, steel, nickel-based alloy, titanium, vanadium, zirconium, hafnium, and refractory metals (niobium, molybdenum, tantalum, tungsten and rhenium). The container itself must be easy to fill and thin-walled and is generally produced from welded sheet material, or built-up by galvanic or sprayed metal deposition on a positive form, e.g. made of wax or a polymer, which is poured out and/or burned off after completion of the container.

Thickness variations of the wall might be desirable so as to influence the consolidation. However, variations in the wall thickness are difficult to achieve when the container is formed from welded sheet material or built-up by galvanic metal deposition.

Because of the necessity to remove the container or capsule after the hot isostatic pressing, near net-shape production of components with complex shapes is difficult or even impossible when using a container or capsule as described above.

The invention aimed at proposing a more suitable container or capsule for and better method of providing a near net-shape quasi-final product by hot isostatic pressing.

### Summary of the Invention

In a first aspect, the invention relates to a method for manufacturing a homogenous near net-shape component made of a material selected from a metal, a metal alloy, or a metal matrix composite, wherein
a gas tight container having one or more cavities and one or more walls is formed of said material by means of additive layer manufacturing (ALM) and
wherein said material is also contained inside said walls being manufactured in comminuted form so as to fill said one or more cavities after completion of the container; and

the gas tight container formed from said material and containing said material in comminuted form in its one or more cavities is subjected to hot isostatic pressing such that a shrunk homogeneous consolidated near net-shape component with a density of equal to or more than about 90% up to theoretical density is formed.

The material should not decompose or otherwise undergo a quick chemical reaction before or during it melts or before or during the metal or metal alloy in the metal matrix composite melts.

Said additive layer manufacturing (ALM) may comprise forming a gas tight container having one or more cavities and one or more walls of said material by successively melting a layer of said material in comminuted form or, in the case of a metal matrix composite, the metal or metal alloy contained in said metal matrix composite material in comminuted form by means of a heat source in a predetermined area and/or along a path having a predetermined breadth and thereafter cooling it so as to form a layer of solidified material within that area and/or along said path which forms part of said wall(s) of said container, said melting and cooling being repeated on top of each layer of solidified material so as to completely built-up the wall(s) of the gas tight container layer by layer, wherein a portion of said material in comminuted form within the wall(s) of the container which has not been melted and then cooled fills the cavity of the container when it is built up, or a portion of said material in comminuted form which has not been melted and then cooled has been filled into the cavity before hermetically closing the container, with the proviso that gas and moisture that may be present in the one or more cavities, if the method is not performed in a vacuum, has been substantially removed, before hermetically closing the container.

Besides an ALM in powder-bed, this method of the first aspect of the invention may comprise that parts or the complete container wall(s) are formed by one of the following procedures, wherein a subsequent powder filling is performed after the completion of the container:
(a) depositing metal or metal alloy powder and/or, as the case may be, powdery or otherwise particulate non-metallic material including ceramic material or a highly heat conducting material by means of one or more nozzles on a platform or on an already formed layer of the wall of the container at a spot where a part of the container wall is to be formed, melting the metal or metal alloy by means of a heat source and then letting the mixture of metal and non-metal components cool; and/or
(b) directing a heat source to one end of a metal or metal alloy wire such that the end of the metallic wire onto which the heat source is directed melts and forms a continuous layer and letting the so-formed material cool so as to form a part of the container wall; and/or
(c) directing a heat source to one end of a metal or metal alloy cored wire or tube in the cavity of which a powder or particles of a non-metallic material including ceramic material or a highly heat conducting material is contained such that the end of the metallic wire or tube onto which the heat source is directed melts and forms, together with the non-metallic powder or particles being released, a continuous matrix in which the non-metallic powder or particles are embedded; and letting the so-formed metal matrix composite cool so as to form a part of the container wall; and/or
(d) providing a powder-bed of powdery particles of a non-metallic material including ceramic material or a highly heat conducting material and a wire or bar made of metal or metal alloy and directing a heat source to one end of the wire or bar such that the end of the wire or bar is molten and infiltrates in the molten state the bed of powdery non-metallic material where, after cooling the so-formed metal matrix composite, a part of the container wall is formed.

The invention furthermore relates to a system consisting of a gas tight container, free of any welding seem, having one or more cavities and made from a material selected from a metal, a metal alloy, or a metal matrix composite and of said material in comminuted form in the one or more cavities of said container.

The material should not decompose or otherwise undergo a quick chemical reaction before or during it melts, or before or during the metal or metal alloy in the metal matrix composite melts.

### Brief Description of the Drawing

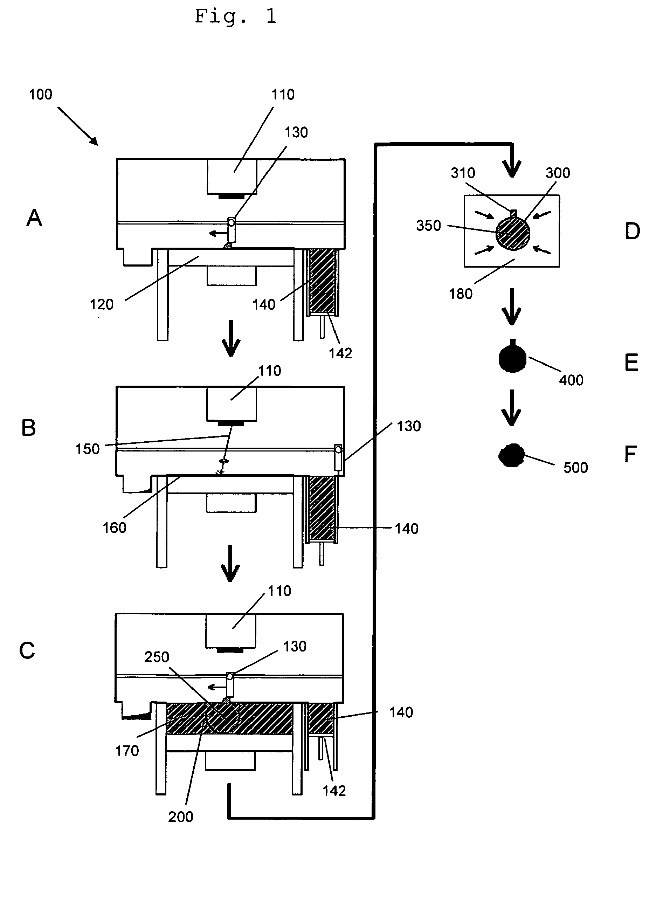

Fig. 1 schematically shows a process of manufacturing a component by a combination of powder Additive Layer Manufacturing (ALM), hot isostatic pressing and final machining.

### Detailed Description

The present inventors surprisingly found that it is not necessary to provide a container or capsule for a comminuted material to be submitted to hot isostatic pressing which is made of a material different from that of the comminuted material.

A thin-walled container or "skin" having a variable wall-thickness, if required, can be made of the same material as the comminuted material, which it is enclosed for hot isostatic pressing, by Additive Layer Manufacturing (ALM) (also known as Additive Manufacturing, Rapid Prototyping or Rapid Manufacturing, in specific cases also known as Selective Laser Sintering (SLS), Selective Laser Melting (SLM), LaserCusing (LC), Direct Metal Deposition (DMD), Laser Engineered Net Shaping (LENS), Laser Rapid Forming (LRF) or Laser Cladding (LC). ALM of metals and metal alloys is a process well-known to the person skilled in the art. However, it is possible to use this process also in connection with other materials. The only prerequisite for a material to be processed in ALM is that the material or, in the case of MMC, the metal matrix has indeed a melting point or melting temperature under the manufacturing conditions and that the material does not decompose or otherwise undergo a quick chemical reaction before or when it melts. Thus, the material of the container and its content to be subjected to hot isostatic pressing may be a metal, a metal alloy, or a MMC.

Some examples of materials useful for the container and its filling are metals, such as titanium, tungsten, tantalum, nickel, iron, aluminium, magnesium or copper, metal alloys, such as titanium alloys (e.g. Ti-6Al-4V), tantalum alloys (e.g. Ta5Re), nickel alloys (e.g. Inconel 718), steels (e.g. FeNi36), aluminium alloys (e.g. AlMgSc, AlSi10), magnesium alloys (e.g. WE43), copper alloys (e.g. CuAg3Zr0.5), bronze, brass, and MMCs, such as ceramic-reinforced metals or metal alloys and carbon-reinforced metals or metal alloys. Oxidic ceramic materials, such as alumina, zirconia, aluminium titanate and iron(III) oxide, are suitable as filling material into the above mentioned container.

A specific MMC is a material having a high heat conductivity, such as diamond, graphite, other carbon materials and/or cubic boron nitride, embedded in a metal or a metal alloy. Such materials and their processing in ALM are described in our co-pending patent application DE102010055201.

For metal, metal alloys and MMC materials the ALM method of choice is the so-called powder-bed method. For ceramic materials, this method may also be used. For ceramic materials, but in specific cases also for metals, metal alloys and MMC materials, there are other methods as well which may be preferred in certain circumstances.

In the following, the term "wall" or "walls" of a container means the totality of all inner and outer surfaces and the material in between constituting the gas tight container, except for its inner cavity, and surrounding the inner cavity.

The term "cavity" is meant to also include a plural of cavities.

The term "theoretical density" means the "normal" density of material, i.e. the density of a single crystal of the material.

The term "near net-shape" as used herein also includes "net-shape", i.e. near net-shape components or products or production etc. also comprise net-shape components or products or production etc.

In the powder-bed method, a thin layer of comminuted material (preferably a more or less spherical powder) is evenly spread over a platform in a vacuum or an inert gas atmosphere. Hereinafter, the ALM process is explained in an embodiment using a more or less spherical powder, but other shapes of comminuted materials, such as flakes, chips, needles and the like, might be used as well. The powder, or the metal component therein in the case of a MMC, is melted by means of a heat source, such a laser, light or electron beam (in the latter case vacuum is mandatory) at a spot, in a predetermined area or along a circumference which represent one cross-section layer of the container wall or "skin" to be manufactured. After cooling, there remains a compacted solid spot, thin plane or circumference of some thickness where the laser, light or electron beam has molten the material. Then the next powder layer is spread evenly over the layer just processed, and the laser, light or electron beam procedure is repeated at a spot, in a predetermined area or along a circumference corresponding to the next cross-section layer of the container wall or skin to be manufactured. The powder which has not been molten, remains where it is, and the part inside the contours of the container wall or skin forms the "filling" of the container. In this manner, a compact gas-tight container wall or skin is built up layer by layer.

The heat source for melting the comminuted material or the metal therein may be e.g. a laser, such as a CO₂ laser, a Nd:YAG laser or a UV laser, sunlight, an electron beam, UV light, a particle beam (e.g. an ion beam) or an electric arc.

Several laser and electron beam systems suitable for the above-mentioned process are commercially available, such as Selective Laser Sintering (SLS), Selective Electron Beam Melting (SEBM), LaserCuising and Selective Laser Melting.

The thickness of the container wall can easily be varied by varying the breadth of the circumference along which the laser or electron beam melts the powder material.

If the ALM process has been conducted in a vacuum, no evacuation of the powder within the container wall or skin is required and the container or skin is closed with the topmost layer(s). Otherwise, a tube is built on the skin by ALM process to allow the powder inside the container wall to be degassed and the container to be evacuated, before the tube of the container is closed by mechanical crimping and subsequent gas tight welding.

The aforesaid powder or otherwise shaped comminuted material used in this powder-bed ALM process generally has a size from about 10 µm to about 2000 µm, preferably about 10 µm to about 400 µm. Preferably about 50% or more of the total amount of comminuted material has a size from about 10 µm to about 400 µm and less than 50% of the total amount of comminuted material has a size from about greater than 400 µm. For metals and metal alloys powder material of a size from about 30 µm to about 80 µm is preferred. In the case of ceramic materials the powder size usually ranges from about 30 µm to about 120 µm. MMC materials may have a size from about 30 µm to about 120 µm.

The thickness of the layer of the comminuted material which is deposited for the first time on the platform or each time onto a layer already processed usually ranges from about 10 µm to about 200 µm. In the case of metals and metal alloys it ranges from about 20 µm to about 150 µm, , and from about 20 µm to about 80 µm in the case of MMC materials.

Metals and metal alloys are particularly preferred materials for forming the container and the content thereof by means of powder-bed ALM.

The powder within the finished container or skin usually has a bulk density of about 30% to about 80%, preferably of about 50% to about 70% of the theoretical density.

Particularly in the case of ceramic materials, but in certain circumstances also for metals, metal alloys and MMC materials, other ALM methods for obtaining the container or skin of the present invention comprise the following, wherein a subsequent powder filling is performed after the completion of the container:
1) Depositing metal or metal alloy powder and/or, as the case me be, powdery or otherwise particulate non-metallic material, such as ceramic material or highly heat conducting material, by means of one or more nozzles on a platform or on an already processed layer of the wall of the container at a spot where a part of the container wall is to be formed, melting the metal or metal alloy by means of a heat source and then letting the mixture of metal and non-metal components cool. This method can be performed in a continuous manner by moving the nozzles and the heat source along a path along which the container wall or skin is to be formed; and/or
2) Directing a heat source to one end of a metal or metal alloy wire such that the end of the metallic wire onto which the heat source is directed melts and forms a continuous layer and letting the so-formed material cool so as to form a part of the container wall; and/or
3) Directing a heat source to one end of a metal or metal alloy cored wire or tube in the cavity of which a powder or particles of the non-metallic material is contained such that the end of the metallic wire or tube onto which the heat source is directed melts and forms, together with the non-metallic powder or particles being released, a continuous matrix in which the non-metallic (powder) particles are embedded; and letting the MMC cool so as to form a part of the container wall or skin. This process can also be conducted continuously by moving the wire or tube and the heat source along a path along which the container wall or skin is to be formed; and/or
4) Providing a powder-bed of powdery particles of the non-metallic material and a wire or bar made of metal or metal alloy and directing a heat source to one end of the wire or bar such that the end of the wire or bar is molten and infiltrates in the molten state the bed of powdery non-metallic material where, after cooling, a part of the container wall or skin is formed. This process can also be conducted continuously by moving the wire or bar and the heat source along a path along which the container wall or skin is to be formed.

In the methods 1) to 4) the powdery material to be consolidated by the hot isostatic pressing has to be filled into the space within the container wall or skin after one, some or almost all layers of the container wall have been built up.

The above methods 1) to 4) can also be used in combination and in combination with the above-described powder-bed process.

Usually the powder or otherwise comminuted material fills the cavity or cavities completely.

Once the container or skin has been formed completely, i.e. in totally closed form without any welding seem, with the powdery or otherwise shaped comminuted material hermetically enclosed inside, the container and its content can be submitted to hot isostatic pressing in a conventional manner. Otherwise a degassing, evacuation and subsequent container closing step is performed.

The container containing the comminuted material is introduced into an autoclave where it is heated and pressurized under a high gas pressure.

In the case of a metal, metal alloy or MMC comminuted material, the temperature during heating is kept below the melting point or solidus line thereof ("sintering"), usually in a range of about 50 to about 90% of the melting point or solidus line (in K), preferably about 75% - 85%. The applied pressure usually ranges from about 10 MPa to about 300 MPa, preferably about 100 MPa. Processing times are typically from about 1 hour to about 10 hours, preferably 2 hours.

In the hot isostatic pressing process, the skin deforms plastically, the container shrinks and the material inside is consolidated. The volume of the filled container may shrink up to about 50% of its initial size, depending on the initial bulk density and the type of the material inside, more commonly up to about 40%, preferably to about 25%.

Metal or metal alloy or MMC densities of virtually theoretical densities or even theoretically densities can be achieved by this method, e.g. densities of about 99.5% or higher, about 99.6% or higher, about 99.7% or higher, about 99.8% or higher, about 99.9% or higher or even 100% of the theoretical density. The densities of ceramics achievable by this process are usually somewhat lower, but usually still well over 90% of the theoretical density, e.g. about 90% or higher, about 92% or higher, about 94% or higher, about 96% or higher, about 98% or higher and in certain cases even up to about 99.9% of the theoretical density.

During hot isostatic pressing, variations in the thickness of the wall of the container can be used to influence the consolidation. Thinner parts of the wall are deformed more easily and such deformed more inwardly than thicker parts of the wall, thereby pushing excess powdery or plastically deformable material e.g. upwards and downwards, where the thicker parts of the wall are not as much deformed inwardly. The result is a homogenous consolidated body e.g. made of a metal or metal alloy with virtually theoretical density having e.g. impressions or indentations at those parts where the container wall was thinner.

The near net-shape quasi-final component obtained after hot isostatic pressing is then machined to obtain the final component.

The present method and system provide many advantages, such as:
- no need to form a separate container consisting of a foreign material which is weldable and ductile under high pressure and high temperature;
- the materials of the container and its content are identical, and accordingly there is no need to completely remove the container after hot isostatic pressing;
- when a non-vacuum powder bed process e.g. a laser based powder-bed process alone is used, there is one manufacturing step saved, namely the powder filling, with four remaining steps, namely forming the container (and at the same time filling it with the powder), degassing the powder, evacuating the container, and closing the container by crimping and welding;
- when a vacuum powder bed process, e.g. an electron or laser beam powder-bed process alone is used, there is only one manufacturing step necessary, namely the ALM process, to form the container and its powdery content, instead of five processes, namely forming the container, filling it with the powder, degassing the powder, evacuating the container, and closing the container by crimping and welding;
- complete freedom of modifying the container wall thickness;
- a (near) net-shape production even of elements having complex geometries, such as fine structural details, through-holes and/or undercut features is possible;
- very little scrap, since the container does not have to be machined off as it is an integral part of the component;
- the time scale for production of components from consolidated materials by using the above described processes decreases by a factor of 2-10 compared to prior art ALM processes, according to the component, e.g. its geometry, size and/or material.

Fig. 1 shows several stages of manufacturing a system of the present invention and a final component produced according to the method of the invention.

Fig. 1A shows a powder-bed device for ALM of objects 100 equipped with a laser or electron beam 110, wherein a powder spreading means 130 spreads powdery material across a platform 120 the powder having been provided from a powder storage 140 by moving upwards a bottom plate 142 thereof. The device is either evacuated or filled with an inert gas, e.g. argon.

Fig. 1B depicts a laser or electron beam 150 which melts a predetermined pattern in a powder layer 160 on platform 120, whereby after cooling a predetermined pattern of consolidated solid coherent material is obtained.

Fig. 1C depicts the process of Fig. 1A after many powder layers with subsequent melting of a predetermined pattern by means of the laser or electron beam and thereby creating a predetermined pattern of consolidated solid material in each layer having already been added on top of the first layer 160. The pattern in the powder melted by the laser or electron beam and thereafter consolidated to a solid coherent material has been chosen such that the wall 200 of a container is built up by the process. Inside of the wall 200, a filling of powder 250 remains, which is separated by the wall 200 of the container being built up from the remainder of the powder-bed 170. If the process is performed in a vacuum, no further evacuation of the powder 250 inside the wall 200 is necessary. Otherwise the device 100 has to be evacuated.

Fig. 1D shows the completed, totally closed spherical container 300 with a tube 310 and being completely filled with powder 350 in case of alternative manufacturing routes besides powder bed ALM i.e. a system according to the present invention, as well as evacuation (not necessary with electron beam ALM). The container 300 is put in a pressure chamber 180, such as an autoclave, filled with (inert) gas. The container 300 filled with powder 350 is subjected to hot isostatic pressing. The arrows symbolize the high pressure applied from all sides to the container.

Fig. 1E shows the shrunk, consolidated, homogenous, quasi-final near net-shape element 400 obtained by hot isostatic pressing having a virtually theoretical density of the material from which it was formed.

Fig. 1F depicts the final element 500 obtained after machining of the near net-shape element of Fig. 1E.

## Claims

1. A method for manufacturing a near net-shape or net-shape component (400) made of a material selected from a metal, a metal alloy, a ceramic material or a metal matrix composite, wherein
a gas tight container (300) having one or more cavities and one or more walls (200) is formed of said material by means of additive layer manufacturing and
wherein said material in comminuted form (250) is also contained inside said walls (200) being manufactured so as to fill said one or more cavities after completion of the container (300); and
the gas tight container (300) formed from said material and containing said material (350) in comminuted form in its one or more cavities is subjected to hot isostatic pressing such that a shrunk homogenous consolidated near net-shape or net-shape component (400) with a density of equal to or more than about 90% up to theoretical density is formed.

2. The method of claim 1 wherein the said material is a metal or a metal alloy.

3. The method of claim 1 or 2 wherein the comminuted form of said material is a powder having approximately spherical particles

4. The method of any of claims 1 to 3 wherein the comminuted particles have an average size of from 10 µm to about 2000 µm.

5. The method of any of claims 1 to 4 wherein the gas tight container (300) having one or more cavities and one or more walls (200) is formed of said material by successively melting and thereafter cooling a layer of said material (160) in comminuted form or, in the case of a metal matrix composite, the metal or metal alloy contained in said metal matrix composite material in comminuted form by means of a heat source (110) in a predetermined area and/or along a path having a predetermined breadth of a powder-bed (170) of said material in comminuted powdery form (160) wherein the powder (250) of each layer which has not been melted and thereafter cooled is not removed before the container (300) is hermetically closed.

6. The method of any of claims 1 to 5 wherein the heat source (110) is a laser, sunlight,an electron beam, particle beam or an electric arc.

7. The method of any of claims 1 to 6 wherein the temperature in the hot isostatic pressing is kept in a range of about 50% to about 80% of the melting point or solidus line in K of the material or the metal in the metal matrix composite, respectively.

8. The method of any of claims 1 to 7 wherein the pressure in the hot isostatic pressing ranges from about 10 MPa to about 300 MPa.

9. The method of any of claims 1 to 8 wherein the near net-shape or net-shape component (400) is further subjected to a final machining.

10. A system consisting of a gas tight container (300) free of any welding seem having one or more cavities and made from a material selected from a metal, a metal alloy, or a metal matrix composite, and of said material (350) in comminuted form in the one or more cavities of said container (300).

11. The system of claim 10 wherein said material is selected from a metal or a metal alloy.

12. The system of claim 10 or 11 wherein the comminuted material in the one or more cavities has a bulk density of from about 30% to about 80% of the theoretical density.

13. The system of any of claims 10 to 12 wherein the comminuted material is a powder having approximately a spherical shape.

14. The system of any of claims 10 to 13 wherein the comminuted material has an average size of from about 10 µm to about 2000 µm.
